# FASCICULE DE BREVET EUROPEEN

(11) **EP 1 128 894 B1**
(45) Date de publication et mention de la délivrance du brevet: **30.06.2004**
(21) Numéro de dépôt: 99970837.3
(22) Date de dépôt: 21.10.1999
(51) Int. Cl.: B01D 53/73, B01D 53/64

(54) **PROCEDE POUR EPURER UNE FUMEE CONTAMINEE PAR DU CHLORURE D'HYDROGENE ET DES METAUX LOURDS, INERTER LESDITS METAUX LOURDS ET VALORISER LEDIT CHLORURE D'HYDROGENE**
VERFAHREN ZUR REINIGUNG EINES MIT WASSERSTOFFCHLORID UND SCHWERMETALLEN VERUNREINIGTEN RAUCHGASES, INERTISIERUNG DER SCHWERMETALLEN UND VALORISIERUNG DES WASSERSTOFFCHLORIDS
METHOD FOR PURIFYING FUME CONTAMINATED BY HYDROGEN CHLORIDE AND HEAVY METALS, RENDERING INERT SAID HEAVY METALS AND UPGRADING SAID HYDROGEN CHLORIDE

(30) Priorité: 30.10.1998 BE 9800786
(43) Date de publication de la demande: 05.09.2001
(73) Titulaire: SOLVAY (Société Anonyme), 1050 Bruxelles (BE)
(72) Inventeur: HUMBLOT, Cédric, F-94300 Vincennes (FR)
(74) Mandataire: Jacques, Philippe
(86) Numéro de dépôt international: PCT/EP1999/008141
(87) Numéro de publication internationale: WO 2000/029095

(56) Documents cités:
- EP-A- 0 829 276
- EP-B- 0 603 218

## Description

L'invention concerne un procédé pour l'épuration d'une fumée contaminée par du chlorure d'hydrogène et des métaux lourds, qui permette par ailleurs un inertage desdits métaux lourds et une valorisation du chlorure d'hydrogène.

Les déchets d'origine ménagère, urbaine ou hospitalière contiennent habituellement des quantités importantes de résidus organiques, notamment chlorés, et de métaux lourds (notamment du zinc, du plomb, du cadmium, du mercure et du chrome). Ils contiennent aussi fréquemment des chlorures métalliques (particulièrement du chlorure de sodium) et de l'aluminium. Une technique régulièrement utilisée pour réduire le volume de ces déchets consiste à les incinérer. L'incinération de tels déchets conduit à la formation de fumées toxiques, contenant du chlorure d'hydrogène, des métaux lourds volatiles et des cendres. Celles-ci contiennent invariablement des chlorures métalliques, des résidus organiques (notamment des dioxines et des furannes), des métaux lourds et des imbrûlés dans lesquels on trouve fréquemment de l'aluminium métallique. Avant d'être rejetées dans l'atmosphère, ces fumées doivent dès lors être dépoussiérées et épurées, et les poussières doivent par ailleurs être traitées pour les rendre inoffensives pour l'environnement.

Dans la demande de brevet européen EP-A 0 829 276 (REVATECH S.A.), on propose un procédé pour inerter des poussières solides provenant de l'incinération de déchets d'origine ménagère, ces poussières étant normalement contaminées par des métaux lourds. Selon ce procédé connu, on disperse les poussières dans de l'eau, avec un composé pouzzolanique et un liant hydraulique, et le brouet aqueux ainsi obtenu est traité pour insolubiliser les métaux lourds. Le brouet est ensuite soumis à une filtration, de laquelle on recueille un résidu solide, d'une part, et une solution aqueuse, d'autre part. La solution aqueuse est soumise à une épuration classique, définie par sa constitution et comprenant notamment un ajustement du pH, une décantation et une filtration sur sable, charbon actif ou résines, avant d'être rejetée dans les eaux de surface ou valorisée dans un processus industriel. Le résidu solide est additionné de la quantité d'eau nécessaire pour assurer la prise et le durcissement du liant hydraulique. A la fin de la période de prise et de durcissement, on recueille un bloc solide et inerte vis-à-vis des intempéries, qui peut dès lors être stocké dans une décharge publique. Dans le procédé connu qui vient d'être décrit, les poussières peuvent être des cendres volantes de la fumée de l'incinération. Elles peuvent également comprendre un résidu solide recueilli d'un traitement d'épuration de la fumée en chlorure d'hydrogène. Dans ce dernier cas, l'épuration de la fumée est opérée indifféremment au moyen d'un lavage à l'eau ou par traitement avec de la chaux.

Le procédé connu décrit ci-dessus présente la particularité de générer des solutions résiduaires dont la valorisation ou l'élimination sont difficiles.

L'invention vise à remédier à ce désavantage du procédé connu susdit, en fournissant un procédé nouveau qui réalise, d'une part, une épuration des fumées d'incinération des déchets ménagers et un inertage des résidus solides de l'épuration et qui facilite, d'autre part, la valorisation du chlorure d'hydrogène de la fumée.

L'invention concerne dès lors un procédé pour, en combinaison, épurer une fumée contaminée par du chlorure d'hydrogène et des métaux lourds, inerter les métaux lourds et valoriser le chlorure d'hydrogène, selon lequel (a) on soumet la fumée à un traitement avec un réactif basique, duquel on recueille un résidu solide contenant les métaux lourds, (b) on disperse le résidu solide et un liant hydraulique dans de l'eau pour former un brouet aqueux et (c) on extrait du brouet, d'une part une masse solide, que l'on écarte, et, d'autre part, une solution aqueuse; selon l'invention, le réactif basique comprend un composé sodique et le traitement de la fumée avec le réactif basique est opéré par voie sèche ou semi-humide.

La fumée soumise au procédé selon l'invention est contaminée par du chlorure d'hydrogène et des métaux lourds volatils. Elle peut en outre être chargée de cendres, notamment des cendres volantes qui peuvent également contenir des métaux lourds. On entend désigner par métaux lourds, les métaux dont la masse spécifique est au moins égale à 5 g/cm³, ainsi que le béryllium, l'arsenic, le sélénium et l'antimoine, conformément à la définition généralement admise (Heavy Metals in Wastewater and Sludge Treatment Processes; Vol. I, CRC Press, Inc; 1987; page 2). Outre le chlorure d'hydrogène et les métaux lourds, la fumée peut contenir d'autres constituants habituellement présents dans les fumées industrielles, tels que de l'aluminium (à l'état métallique ou combiné), de l'oxygène, de l'azote, du monoxyde de carbone, du dioxyde de carbone, des oxydes de soufre, des oxydes d'azote, des dioxines et des furannes.

Dans le procédé selon l'invention, on soumet la fumée à un traitement avec un réactif basique qui, selon l'invention, comprend un composé sodique. Par définition, le composé sodique est un composé chimique contenant du sodium. Il est généralement un composé inorganique et il est basique de sorte qu'il décompose le chlorure d'hydrogène présent dans la fumée en formant du chlorure de sodium. Le composé sodique constitue généralement plus de 50 % (de préférence au moins 80 %) du poids du réactif basique. Il constitue avantageusement l'essentiel, voire la totalité du réactif basique.
Le composé sodique peut par exemple comprendre de l'hydroxyde de sodium. Selon une forme de réalisation avantageuse de l'invention, le composé sodique comprend du (bi)carbonate de sodium. L'expression (bi)carbonate de sodium désigne indifféremment du bicarbonate de sodium, du carbonate de sodium anhydre ou hydraté ou un mélange de carbonate de sodium et de bicarbonate de sodium, par exemple du sesquicarbonate de sodium qui est un composé de formule générale Na₂CO₃.NaHCO₃.2H₂O obtenu notamment au départ d'un minerai de trona. Le bicarbonate de sodium est préféré.
En plus du composé sodique, le réactif basique peut comprendre des additifs renforçant l'efficacité de l'épuration de la fumée tels que, par exemple, un composé peroxydé de métal alcalin [comme proposé dans la demande de brevet européen EP-0 779 834 de SOLVAY(Société Anonyme)] ou un hydroxycarbonate de magnésium ou du coke de lignite comme proposé dans la demande de brevet belge 09700417 [SOLVAY (Société Anonyme)].

Conformément à l'invention, le traitement de la fumée avec le réactif basique est un traitement par voie sèche ou un traitement par voie semi-humide. On entend par traitement par voie sèche un traitement dans lequel le réactif basique est introduit à l'état d'une poudre solide dans la fumée, en l'absence d'un liquide, en particulier d'eau. En général, dans le traitement par voie sèche, le réactif basique est mis en oeuvre à l'état d'une poudre que l'on injecte dans un courant de fumée circulant à l'intérieur d'une chambre de réaction. On entend par traitement semi-humide un traitement dans lequel le réactif basique est introduit dans la fumée en présence d'une quantité de liquide (habituellement de l'eau) telle que celui-ci soit totalement vaporisé au moment où on recueille le résidu solide. Dans le traitement par voie semi-humide, le réactif basique est généralement mis en oeuvre à l'état d'une poudre dispersée dans un liquide, généralement de l'eau. Des informations concernant le traitement de la fumée avec le réactif basique sont accessibles dans le brevet européen EP-603 218 et la demande internationale WO 95/19835, tous les deux au nom de SOLVAY (Société Anonyme).

A l'issue du traitement avec le composé basique, on soumet la fumée à un dépoussiérage pour recueillir un résidu solide pulvérulent, comprenant du chlorure de sodium et des métaux lourds. Le dépoussiérage n'est pas critique et peut comprendre, par exemple, un traitement dans un hydrocyclone, dans un électrofiltre ou dans un filtre du type à tissus filtrants. On préfère mettre en oeuvre un filtre du type à tissus filtrants, les filtres à manches convenant bien.

Le résidu solide recueilli du dépoussiérage contient du chlorure de sodium et des métaux lourds. On le disperse dans de l'eau avec un liant hydraulique, de manière à former un brouet aqueux. Le liant hydraulique peut par exemple comprendre de la chaux, du clinker de ciment Portland ou du ciment Portland. On préfère le clinker de ciment Portland. Le liant hydraulique doit être mis en oeuvre en une quantité suffisante pour former un béton avec le résidu solide et l'eau. La quantité optimum de liant hydraulique va dès lors dépendre de la composition du résidu solide et de celle du liant hydraulique sélectionné, et elle peut être déterminée aisément par un travail de routine. En pratique, on obtient de bons résultats avec des quantités pondérales de liant hydraulique comprises entre 5 et 90 % (de préférence de 10 à 60 %) du poids de matière sèche du résidu solide.

Selon une variante avantageuse de l'invention, le liant hydraulique comprend un composé pouzzolanique, par exemple du laitier de haut fourneau ou des cendres volantes de centrales thermiques. Dans cette variante de l'invention, le composé pouzzolanique est avantageusement mis en oeuvre en une quantité pondérale de 5 à 90 % (de préférence de 10 à 60 %) du poids de matières sèches du résidu solide. L'eau doit être mise en oeuvre en une quantité suffisante pour que le brouet aqueux soit pompable, ce qui signifie que le brouet doit posséder une fluidité suffisante pour se comporter comme un liquide, par opposition aux solides.

Pour homogénéiser le brouet, on le soumet à un malaxage. Le malaxage du brouet peut comprendre un broyage de ses constituants solides.

Le brouet aqueux est en outre soumis à un traitement physico-chimique approprié pour insolubiliser les métaux lourds et l'aluminium et pour détruire les ions complexes dangereux tels que, par exemple, les ions cyanure (CN-) et les ions nitrite (NO₂⁻⁻). Ce traitement physico-chimique, bien connu en soi, comprend notamment un ajustement du pH et l'addition de réactifs appropriés.

Des particularités et détails concernant la formation du brouet aqueux et son traitement physico-chimique sont accessibles dans le document EP-A 0 829 276.

Après homogénéisation du brouet, on le soumet à une filtration, une centrifugation ou une sédimentation suivie d'une décantation pour recueillir séparément une masse solide et une solution aqueuse. La masse solide contient la majeure partie des métaux lourds. Elle est additionnée de la quantité d'eau nécessaire pour réaliser la prise et le durcissement du liant hydraulique, comme exposé dans le document EP-A 0 829 276. A l'issue du durcissement, on recueille un béton qui contient les métaux lourds à l'état inerte et peut, de ce fait, être stocké dans une décharge publique.

La solution aqueuse séparée du brouet est une solution aqueuse de chlorure de sodium de grande pureté, qui trouve diverses applications industrielles.

Dans le cas où la fumée traitée contient du dioxyde de carbone et/ou des oxydes de soufre, le résidu solide susdit, séparé de la fumée, contient normalement du carbonate de sodium et/ou du sulfate de sodium. Dans une forme de réalisation particulière du procédé selon l'invention, appliqué à une fumée de ce type, on additionne du chlorure de calcium audit résidu solide, au moment de sa dispersion dans l'eau avec le liant hydraulique. Dans cette forme de réalisation de l'invention, le chlorure de calcium a pour fonction de décomposer le carbonate de sodium et/ou le sulfate de sodium et former du carbonate de calcium et/ou du sulfate de calcium qui précipitent. Toutes autres choses étant égales par ailleurs, la solution aqueuse de chlorure de sodium recueillie de cette forme de réalisation de l'invention présente une teneur moindre en métaux lourds.

Dans une autre forme d'exécution particulière du procédé selon l'invention, la solution aqueuse de chlorure de sodium, séparée du brouet est traitée sur une résine chélatante, pour en éliminer les dernières traces de métaux lourds qui s'y trouveraient à l'état dissous. Des particularités et détails concernant le traitement de la solution aqueuse de chlorure de sodium sur la résine chélatante sont accessibles dans le brevet européen EP- 603 218 [SOLVAY (Société Anonyme)].

La solution aqueuse de chlorure de sodium, séparée du brouet contient habituellement du chlorure de calcium, provenant du liant hydraulique mis en oeuvre. La présence de chlorure de calcium dans la solution aqueuse de chlorure de sodium peut gêner pour certaines applications, notamment lorsque ladite solution est traitée par la suite sur une résine chélatante. A cet effet, dans une forme d'exécution avantageuse du procédé selon l'invention, on additionne du carbonate de sodium à ladite solution aqueuse, que l'on soumet ensuite à une filtration. Dans cette forme de réalisation de l'invention, le carbonate de sodium est de préférence mis en oeuvre en une quantité suffisante pour décomposer le chlorure de calcium qu'elle contient et précipiter le calcium à l'état de carbonate de calcium. On n'a pas intérêt à utiliser un excès de carbonate de sodium. Dans cette forme de réalisation du procédé selon l'invention, le précipité de carbonate de calcium recueilli de la filtration est avantageusement mélangé au résidu solide susdit, avant ou pendant qu'on le disperse dans l'eau.

La solution aqueuse de chlorure de sodium obtenue à l'issue du procédé selon l'invention se particularise par une très grande pureté et trouve, de ce fait, diverses applications dans l'industrie. Elle peut notamment servir de matière première pour la fabrication de carbonate de sodium par le procédé de la soude à l'ammoniaque (également dénommé "Procédé SOLVAY"), pour la fabrication électrochimique de chlore et de solutions aqueuses d'hydroxyde de sodium, ainsi que pour la fabrication de sel solide.

L'invention réalise, de manière originale et économique, une épuration efficace des fumées contaminées par des métaux lourds et du chlorure d'hydrogène, un inertage efficace et sûr des métaux lourds de la fumée et une valorisation optimum du chlorure d'hydrogène de la fumée, à l'état de chlorure de sodium dont les débouchés industriels sont importants.

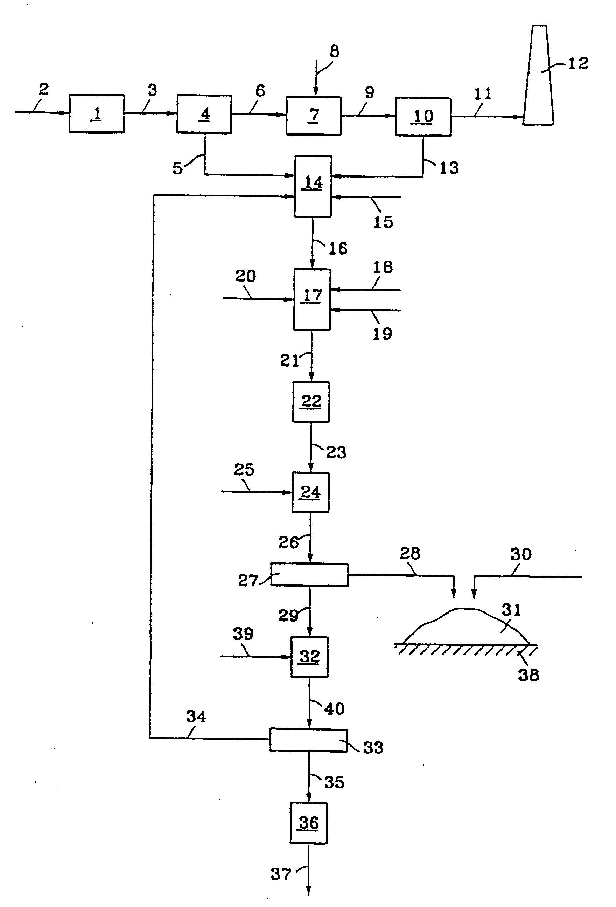

Des particularités et détails de l'invention vont ressortir de la description suivante de la figure unique du dessin annexé, qui représente le schéma d'une installation utilisant une forme de réalisation particulière du procédé selon l'invention.

L'installation de la figure comprend un four 1 que l'on alimente avec des déchets ménagers ou hospitaliers 2. La fumée 3 émise par le four 1 est contaminée par du chlorure d'hydrogène, des métaux lourds volatiles et du dioxyde de soufre. Elle est par ailleurs chargée de cendres contenant des métaux lourds. On la traite d'abord dans un dispositif de dépoussiérage 4 (par exemple un cyclone ou un filtre électrostatique), pour en séparer les cendres 5. La fumée dépoussiérée 6 recueillie du dépoussiéreur 4, est introduite dans une chambre de réaction 7 où on lui additionne du bicarbonate de sodium 8 à l'état d'une poudre. Le bicarbonate de sodium est introduit dans la fumée en une quantité suffisante pour décomposer sensiblement la totalité du chlorure d'hydrogène et du dioxyde de soufre de la fumée et former du chlorure de sodium et du sulfate de sodium. La fumée 9 recueillie de la chambre de réaction 7 est traitée sur un filtre 10 pour la dépoussiérer et la fumée ainsi dépoussiérée 11 est évacuée à la cheminée 12. Le filtre 10 comprend de préférence un filtre à tissu filtrant (par exemple un filtre à manches).
Les cendres 5 contiennent des métaux lourds et doivent être traitées. Les poussières 13 retenues dans le filtre 10 comprennent du chlorure de sodium, du sulfate de sodium, du chlorure de potassium, des métaux lourds et du carbonate de sodium provenant de l'excès de bicarbonate de sodium mis en oeuvre. Les cendres 5 et les poussières 13 sont réunies dans une chambre de mélange 14. On introduit en outre, dans la chambre 14, du chlorure de calcium 15 en une quantité sensiblement égale à la quantité nécessaire pour former du sulfate de calcium et du carbonate de calcium par réaction avec le sulfate de sodium et le carbonate de sodium des poussières 13. Le chlorure de calcium 15 peut être mis en oeuvre à l'état solide ou à l'état d'une solution aqueuse. On préfère utiliser une poudre de chlorure de calcium.
Le mélange 16 recueilli de la chambre de mélange 14 est introduit dans une seconde chambre de mélange 17, où on lui additionne un liant hydraulique (clinker de ciment Portland) 18, un composé pouzzolanique 19 (par exemple des cendres volantes de centrale thermique ou un laitier de haut fourneau) et de l'eau 20. On utilise une quantité suffisante d'eau 20 pour obtenir dans la chambre 17 une masse liquide qui soit pompable. La masse liquide, pompable 21 recueillie de la chambre 17 est introduite dans une chambre de malaxage 22, où on la soumet à un malaxage et à un broyage mécanique pour l'homogénéiser. On recueille de la chambre de malaxage 22, un brouet aqueux 23 que l'on transfère dans une chambre de réaction 24. Dans la chambre de réaction 24, on soumet le brouet à un traitement physico-chimique approprié (notamment avec des réactifs adéquats 25) pour insolubiliser les métaux lourds et l'aluminium qu'il contient et pour détruire les ions complexes dangereux, notamment les ions cyanure (CN⁻) et nitrite (NO₂⁻⁻). On soutire un brouet 26 de la chambre de réaction 24 et on le traite immédiatement sur un filtre 27où on sépare, d'une part un gâteau 28 et, d'autre part, une solution aqueuse de chlorure de sodium 29. Le gâteau 28 contient les métaux lourds et les autres impuretés nocives de la fumée 3, dans un état inerte vis-à-vis de l'environnement. Il est déposé sur une aire d'épandage 38, où on l'arrose avec une quantité d'eau suffisante 30 pour provoquer la prise et le durcissement des liants hydraulique et pouzzolanique qu'il contient et former progressivement un bloc solide et inerte 31. Après broyage, le bloc 31 peut être évacué dans une décharge publique, non représentée.

La solution aqueuse de chlorure de sodium 29 recueillie du filtre 27 contient encore des traces de métaux lourds à l'état dissous. Elle contient en outre des composés solubles du calcium (principalement du chlorure de calcium). Dans une chambre de réaction 32, on lui additionne du carbonate de sodium 39 en une quantité suffisante pour précipiter le calcium à l'état de carbonate de calcium. On filtre (33) la suspension aqueuse de carbonate de calcium ainsi obtenue 40 pour recueillir le précipité de carbonate de calcium 34 et on recycle celui-ci dans la chambre de mélange 14. La solution aqueuse filtrée 35 est traitée sur une résine chélatante 36 pour en extraire les traces de métaux lourds qu'elle contient et on recueille une solution aqueuse de chlorure de sodium de grande pureté 37, utilisable telle quelle comme matière première dans un processus industriel.

## Revendications

1. Procédé pour, en combinaison, épurer une fumée contaminée par du chlorure d'hydrogène et des métaux lourds, inerter les métaux lourds et valoriser le chlorure d'hydrogène, selon lequel (a) on soumet la fumée à un traitement opéré par voie sèche ou semi-humide avec un réactif basique comprenant un composé sodique, duquel on recueille un résidu solide contenant les métaux lourds, (b) on disperse le résidu solide et un liant hydraulique dans de l'eau pour former un brouet aqueux, (c) on soumet le brouet aqueux a un traitement physico-chimique pour y insolubiliser les métaux lourds et l'aluminium et détruire les ions complexes dangereux et (d) on extrait du brouet, d'une part une masse solide, que l'on écarte, et, d'autre part une solution aqueuse.

2. Procédé selon la revendication 1, **caractérisé en ce qu'**on sélectionne le liant hydraulique parmi le ciment Portland et le clinker de ciment Portland.

3. Procédé selon la revendication 1, **caractérisé en ce qu'**on sélectionne le composé sodique parmi le carbonate de sodium, le bicarbonate de sodium, le sesquicarbonate de sodium et les mélanges de ces composés.

4. Procédé selon la revendication 1 ou 2, **caractérisé en ce que** le réactif basique comprend au moins 80 % en poids du composé sodique.

5. Procédé selon l'une quelconque des revendications 1 à 3, **caractérisé en ce que** le liant hydraulique comprend un composé pouzzolanique.

6. Procédé selon l'une quelconque des revendications 1 à 5, **caractérisé en ce qu'**on traite la solution aqueuse sur une résine chélatante.

7. Procédé selon l'une quelconque des revendications 1 à 6, **caractérisé en ce que**, dans le cas où la fumée contient du dioxyde de carbone et/ou du dioxyde de soufre, on additionne du chlorure de calcium au résidu solide.

8. Procédé selon l'une quelconque des revendications 1 à 7, **caractérise en ce qu'**on traite la solution aqueuse avec du carbonate de sodium, en sorte de précipiter du carbonate de calcium que l'on recueille et recycle dans le résidu solide.

9. Procédé selon l'une quelconque des revendications 1 à 8, **caractérisé en ce qu'**avant de traiter la fumée avec le réactif basique, on la soumet à un dépoussiérage, duquel on recueille des poussières que l'on mélange au résidu solide.

10. Procédé selon l'une quelconque des revendications 1 à 9, **caractérisé en ce qu'**on l'applique à une fumée générée par l'incinération de déchets ménagers ou hospitaliers.

## Claims

1. Process for, in combination, purifying a flue gas contaminated by hydrogen chloride and heavy metals, rendering inert the heavy metals and recovering in value the hydrogen chloride, according to which (a) the flue gas is subjected to a treatment, carried out by the dry or semi-wet route, with a basic reactant comprising a sodium compound, from which a solid residue comprising the heavy metals is collected, (b) the solid residue and a hydraulic binder are dispersed in water to form an aqueous slurry, (c) the aqueous slurry is subjected to a physicochemical treatment in order to render the heavy metals and the aluminium insoluble therein and to destroy the dangerous complex ions and (d) a solid mass, which is discarded, and an aqueous solution are extracted from the slurry.

2. Process according to Claim 1, **characterized in that** the hydraulic binder is selected from Portland cement and Portland cement clinker.

3. Process according to Claim 1, **characterized in that** the sodium compound is selected from sodium carbonate, sodium bicarbonate, sodium sesquicarbonate and the mixtures of these compounds.

4. Process according to Claim 1 or 2, **characterized in that** the basic reactant comprises at least 80% by weight of the sodium compound.

5. Process according to any one of Claims 1 to 3, **characterized in that** the hydraulic binder comprises a pozzolanic compound.

6. Process according to any one of Claims 1 to 5, **characterized in that** the aqueous solution is treated over a chelating resin.

7. Process according to any one of Claims 1 to 6, **characterized in that**, in the case where the flue gas comprises carbon dioxide and/or sulphur dioxide, calcium chloride is added to the solid residue.

8. Process according to any one of Claims 1 to 7, **characterized in that** the aqueous solution is treated with sodium carbonate, so as to precipitate calcium carbonate, which is collected and recycled in the solid residue.

9. Process according to any one of Claims 1 to 8, **characterized in that**, before treating the flue gas with the basic reactant, it is subjected to dedusting, from which dust is collected which is mixed with the solid residue.

10. Process according to any one of Claims 1 to 9, **characterized in that** it is applied to a flue gas generated by the incineration of domestic or hospital waste.

## Patentansprüche

1. Verfahren zum kombinierten Reinigen eines mit Chlorwasserstoff und Schwermetallen verunreinigten Rauchgases, Inertisieren der Schwermetalle und Valorisieren des Chlorwasserstoffes, worin (a) das Rauchgas einer auf trockenem oder halbnassem Wege ausgeführten Behandlung mit einem basischen, eine Natriumverbindung umfassenden Reaktionsmittel unterzogen werden, aus welcher Behandlung ein die Schwermetalle enthaltender fester Rückstand gewonnen wird, (b) der feste Rückstand und ein hydraulisches Bindemittel in Wasser dispergiert wird, um eine wäßrige Aufschlämmung auszubilden, (c) die wäßrige Aufschlämmung einer physikalisch-chemischen Behandlung unterworfen wird, um darin die Schwermetalle und das Aluminium unlöslich zu machen und die gefährlichen Komplexionen zu zerstören und (d) aus der Aufschlämmung einerseits eine feste Masse abgesondert wird, die verworfen wird, und anderseits eine wäßrige Lösung.

2. Verfahren nach Anspruch 1, **dadurch gekennzeichnet, daß** das hydraulische Bindemittel unter Portlandzement und Portlandzementklinker ausgewählt wird.

3. Verfahren nach Anspruch 1, **dadurch gekennzeichnet, daß** die Natriumverbindung unter Natriumcarbonat, Natriumbicarbonat, Natriumsesquicarbonat und den Gemischen dieser Verbindungen ausgewählt wird.

4. Verfahren nach Anspruch 1 oder 2, **dadurch gekennzeichnet, daß** das basische Reaktionsmittel wenigstens 80 Gew.-% Natriumverbindung umfaßt.

5. Verfahren nach einem der Ansprüche 1 bis 3, **dadurch gekennzeichnet, daß** das hydraulische Bindemittel eine Puzzolanverbindung umfaßt.

6. Verfahren nach einem der Ansprüche 1 bis 5, **dadurch gekennzeichnet, daß** die wäßrige Lösung über einem chelatisierenden Harz behandelt wird.

7. Verfahren nach einem der Ansprüche 1 bis 6, **dadurch gekennzeichnet, daß** dann, wenn das Rauchgas Kohlendioxid und/oder Schwefeldioxid enthält, dem festen Rückstand Calciumchlorid zugesetzt wird.

8. Verfahren nach einem der Ansprüche 1 bis 7, **dadurch gekennzeichnet, daß** die wäßrige Lösung mit Natriumcarbonat behandelt wird, um Calciumcarbonat auszufällen, das gewonnen und zum festen Rückstand rezykliert wird.

9. Verfahren nach einem der Ansprüche 1 bis 8, **dadurch gekennzeichnet, daß** vor der Behandlung des Rauchgases mit dem basischen Reaktionsmittel das Rauchgas einer Entstaubung unterzogen wird, woraus die Stäube gewonnen werden, die dem festen Rückstand zugemischt werden.

10. Verfahren nach einem der Ansprüche 1 bis 9, **dadurch gekennzeichnet, daß** man es auf ein Rauchgas anwendet, das durch Verbrennen von Haushalts- oder Spitalsabfällen gebildet wird.
